# EUROPEAN PATENT APPLICATION

(11) **EP 1 143 328 A2**
(43) Date of publication of application: **10.10.2001**
(21) Application number: 01300172.2
(22) Date of filing: 10.01.2001
(51) Int. Cl.: G06F 3/033

(54) **Display system**

(30) Priority: 11.01.2000 GB 0000542
(71) Applicant: RESEARCH MACHINES PLC, Milton, Abingdon, Oxon OX14 4SE (GB)
(72) Inventor: Tricklebank, Stuart, Headington, Oxford OX3 7EY (GB); Richards, Aled, Cardiff, Wales CF5 1LZ (GB)
(74) Representative: Loveless, Ian Mark

(57) **Abstract**

A system for arranging and displaying objects on a display comprises a display controller for controlling the display. The system also includes a user input device to allow users to move objects to similar regions on a display and the controller is arranged so that objects in similar regions share similar properties. These similar properties are, for example, the ability to move objects together, such as numbers on a number grid or number line.

## Description

### Background to the invention

In recent years most lectures to large gatherings have used pre-prepared presentations displayed via a projector, displaying the image from the computer on a projection screen.

These systems whilst popular have not yet been widely used in traditional school teaching or other more interactive one to many presentations. The principle reason for this is that the didactic approach of many teachers does not lend itself to having a fully scripted pre-prepared presentation.

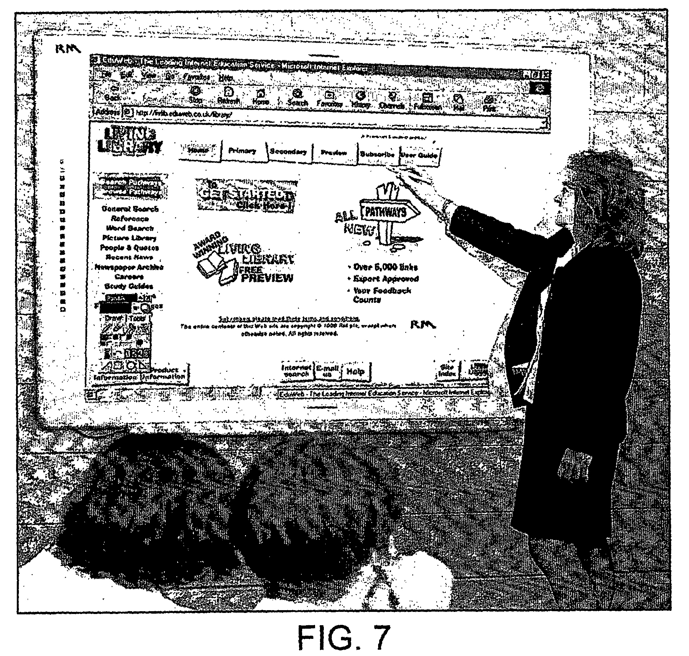

More recently some schools have started to use more interactive electronic displays as shown in Figure 7. These "Electronic whiteboards" allow both display of standard computer presentations but also allow interactions directly by enabling the presenter to "write" or in other ways directly manipulate the computer generated image while standing at the board, via use of an "electronic marker".

Whilst there has been big development in both electronic whiteboards and windowing and teaching software in general there has been relatively little activity in the generation of software specifically for the electronic whiteboard environment.

We have appreciated that a teacher or lecturer may want to work on several areas of a problem or issue at once, this will probably mean using separate areas of the display area for separate subsections of the overall problem. However, we have also appreciated that if all objects are treated as equal then there can be no grouping of objects to allow particular pieces of the problem at hand to be manipulated as a whole.

We have also appreciated that the display of text and other graphics should be consistent on the screen when teaching. Otherwise, showing a variety of different display types could confuse the students.

### Summary of the invention

In a broad aspect, the invention provides a system arranged such that objects shown on a display in similar areas of that display share similar characteristics.
Such characteristics may include the visual appearance of the object, and also the way that the object behaves such as the ability to group object together and move them around on a screen in unison.

In particular, there is provided a system for arranging and displaying objects on a display comprising a display controller for controlling a display, the display thereby being configured to show a plurality of objects, the system further comprising a user input device configured to allow a user to move objects to similar regions of the display, the display controller automatically configuring the objects in similar regions of the display to share similar properties.

In a first broad aspect, the invention provides a system for grouping of objects within software intended for whiteboard display to allow groups of objects to be treated as a single object.

In particular, the similar properties indicate that objects belong as a group thereby configuring the controller to manipulate those objects as a group. A user may thereby move a plurality of objects in one region without requiring selection of all the objects.

In a second abroad aspect, the invention provides a system arranged to modify the visual properties of an on-screen object to match the properties of an object of the same type in the same region of a display.

In particular, there is provided a teaching system comprising a display and a display controller for controlling the display, the display being configured to show a plurality of objects, the system being arranged such that objects shown in the same region of a display share similar characteristics. The characteristics are visual characteristics, for example, such as font size or position.

### Brief Description of the figures

Figures 1 & 2 show a "piece of paper" by which objects may be grouped;
Figures 3 & 4 show an object placed on the paper as a group;
Figures 5 & 6 show manipulation of objects as a group; Figure 7 shows a whole display in use;
Figures 9 to 16 show the functions performed by a display controller and user input device; and
Figures 17 to 20 show the changing characteristics of a display.

### Description of a preferred embodiment of the invention

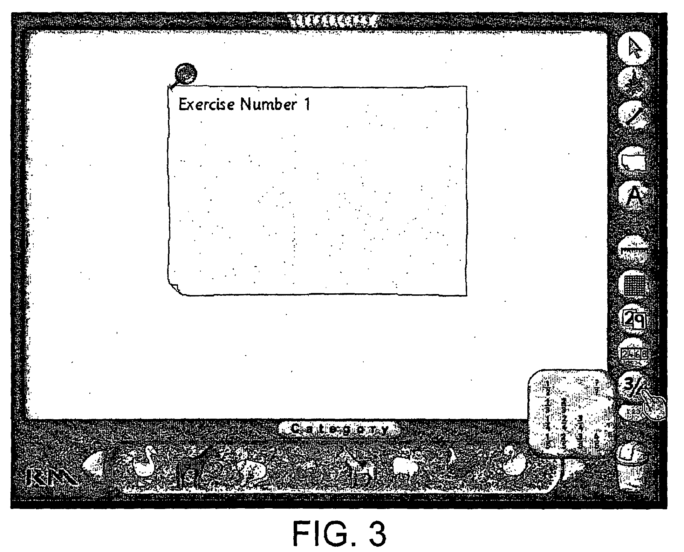

The embodiment is intended for use for Primary school whole class mathematics teaching using an electronic white board (see Figure3 for an example of the sort of whiteboard). The system allows objects to be grouped using an intuitive 'natural' interface so that when objects are laid on top of other objects, they then are tentatively 'stuck' together. When an underlying object is moved (e.g. by selecting the object's drawing pin), all objects 'stuck' to it are moved with it. The attached objects can then be 'unstuck' by selecting that object individually. In this description an object means any graphical item that is displayable on a screen, such as pictures and, in particular, text.

All of this is achieved without resort to a keyboard or a two button input device, neither of which is likely to be available. The grouping of objects is achieved simply by moving objects to be in the same region of a display. Objects in the same region are automatically given the same characteristics so that they can be moved together or automatically given the same individual characteristics such as font size and position.

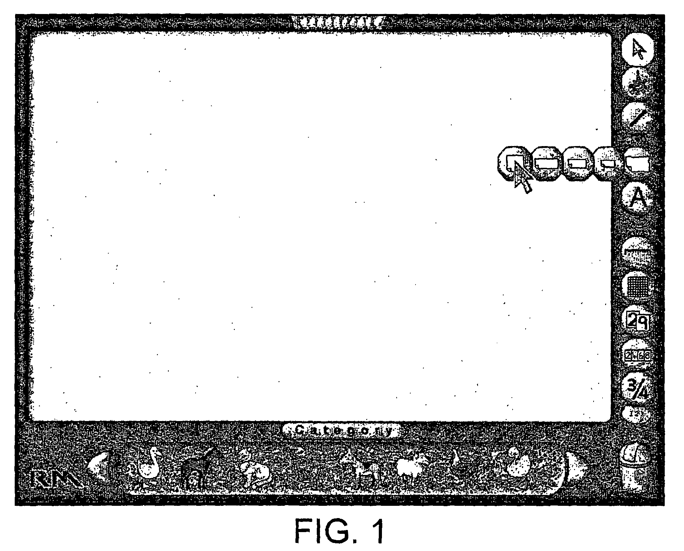

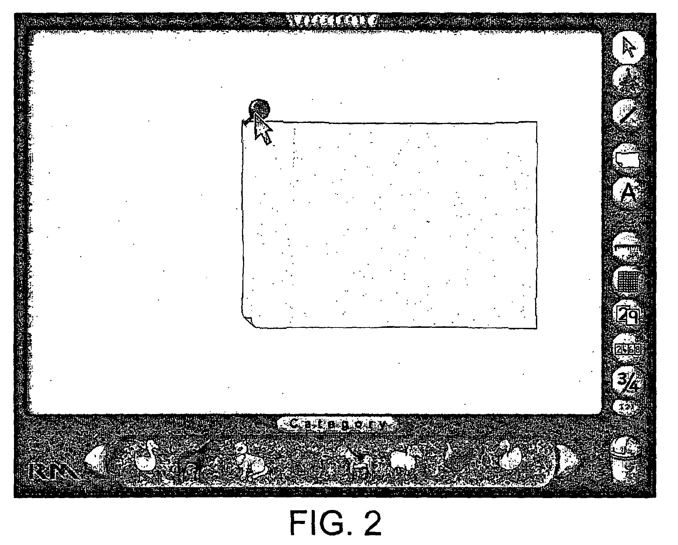

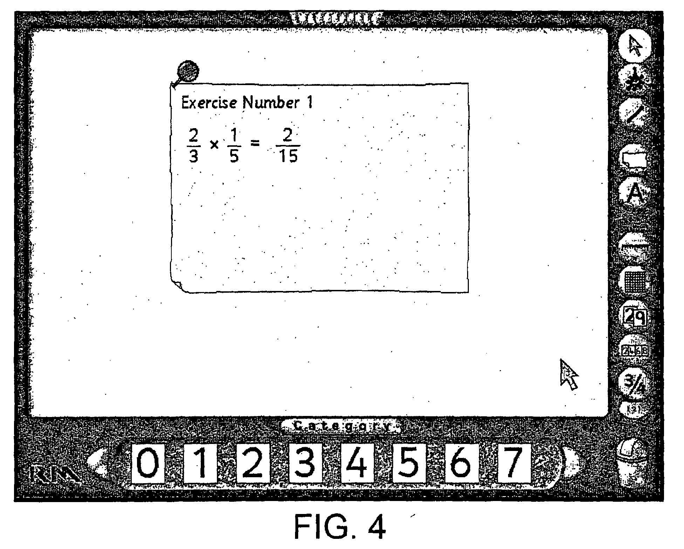

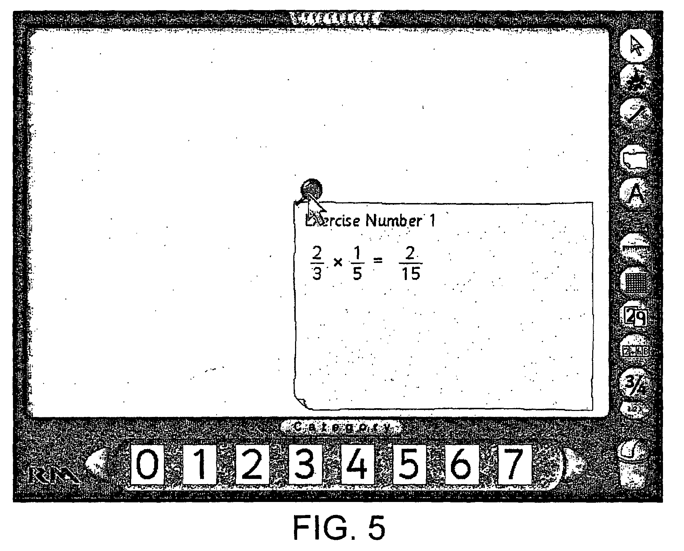

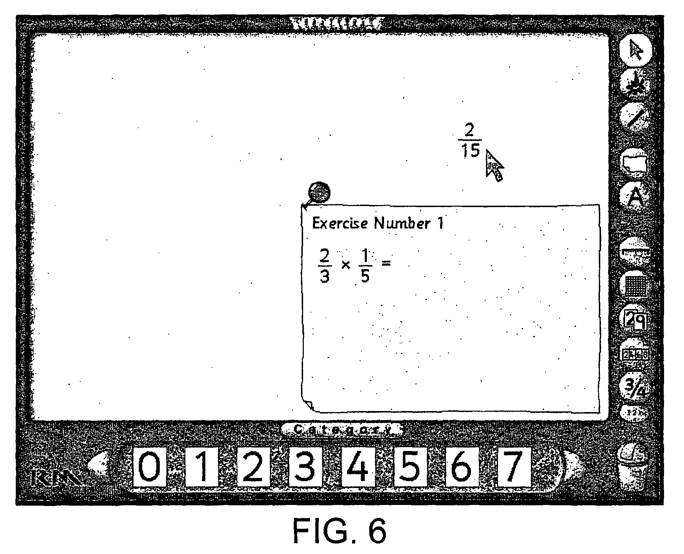

For example, in figures 1 and 2 a "piece of paper" is generated and placed on the screen (by moving the virtual drawing pin) for a subsection of a problem to be displayed on. In figures 3 and 4 the relevant display is placed on the underlying group object. Figures 5 and 6 show how the group now can be either manipulated as a whole or individually. Note that manipulation doesn't just mean moving it can also mean other actions such as deleting a whole group of objects.

The second broad aspect involves changing the properties of a visual object in the system to match the properties of similar objects with the same parent object, in cases where it makes sense to do so.

For example, if a number were dropped into a number grid that already contains numbers, the size of the number being dropped would change to match the other numbers in the grid.

The embodiment is intended for use in Primary School whole class mathematics teaching using an electronic whiteboard. The system automatically changes the properties of numbers when they are dropped onto number lines and number grids to match the size and type of the numbers already on the line or grid. This facility ensures that teachers do not have to take the extra steps of changing the font size, and type in order to use them with the number line and number grid tools, thereby saving the teachers time and helping to maintain the pace of a lesson.

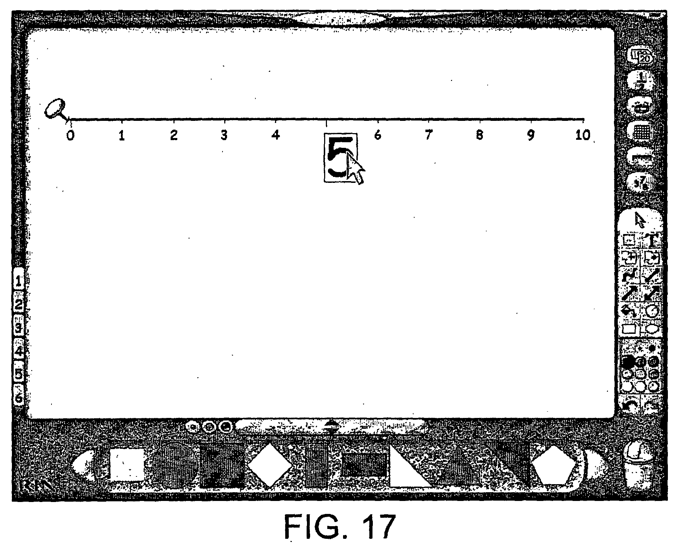

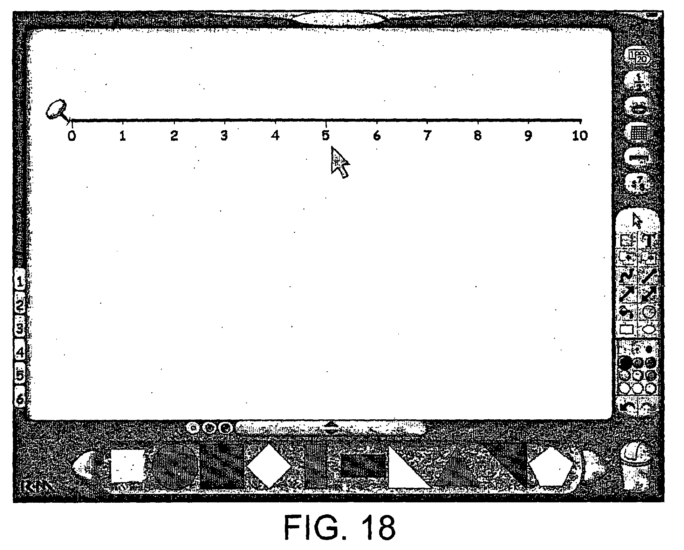

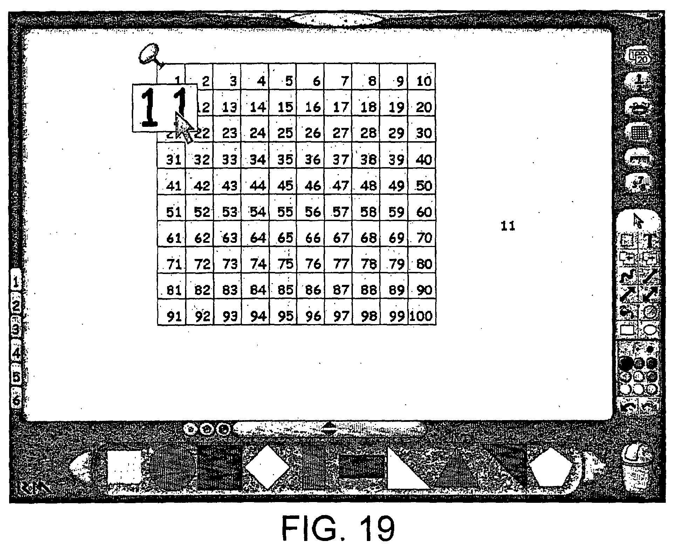

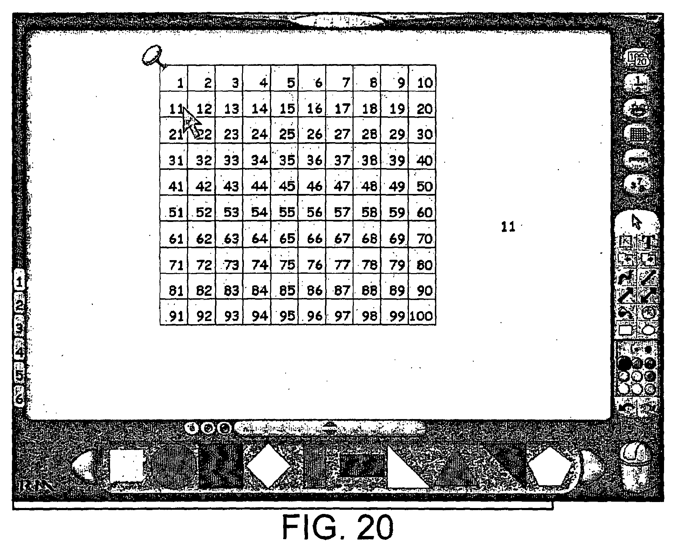

Figure 17 shows a number that is about to be dropped onto a number line. Figure 18 shows the number after it has been dropped. Figure 19 shows a number that has been dropped onto a number grid. Figure 20 shows the number after it has been dropped.

Each object on the screen is derived from a common base class that ensures that each object behaves in a similar manner. An object's base class maintains a list of pointers to the objects that are 'stuck' to it. When a new object is 'stuck' to an underlying object, the pointer list of the underlying object is updated to include a pointer to the newly attached object. Similarly, when an object is detached, the corresponding item is removed from the list. In addition, 'base pointers' are also maintained which points from a child object to its parent. This method allows any number of objects to be stacked up and disassembled.

The use of class inheritance enables objects which require a specific functionality to work correctly with any other object on the screen. For example, number-grids ensure that any numbers added to them align correctly with the number grid squares.

The embodiment is implemented in Microsoft Visual C++ 6.0 for Windows 9X/2000/NT and was originally developed using MFC AppWizard to create source with a Document/View architecture. An original skeleton set of classes was obtained by taking a set of classes from another development. The majority of the classes are used for screen handling and provide an API to allow graphical objects created and moved on the screen using a double-buffered rendering-and-drawing approach. There are also files for parsing custom files to store configuration information.

The applications screen is made up of a work-area and a set of toolbars positioned around it. All elements of the user interface (the 'workarea' and the 'buttons') are made up of a group of basic object-oriented graphic primitives called ScreenItems which can be positioned, hit-tested etc. The ScreenItem class is an interface class, which is sub-classed to provide functionality for a large array of object-oriented drawing primitives such as sprites, text, lines, rectangles etc

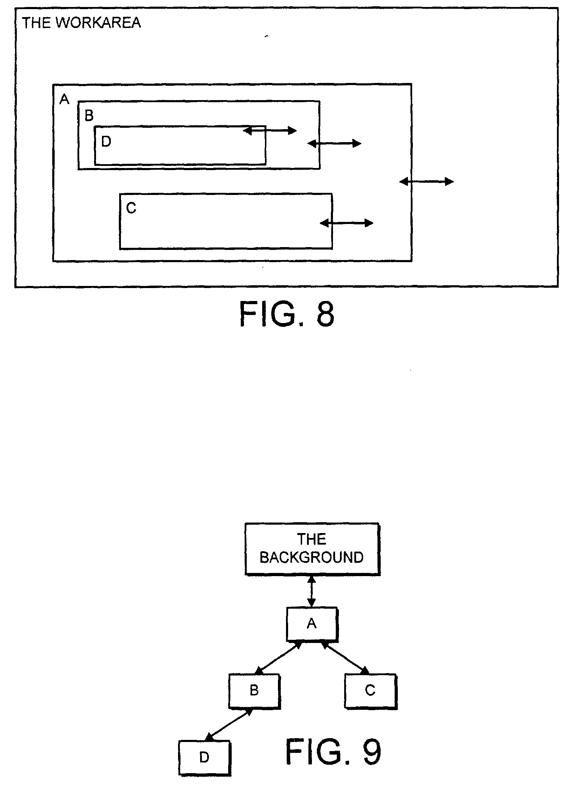

Each work-area object (e.g. A, B, C and D in figure 8) uses a class derived from a WorkAreaObject class. WorkAreaObjects contain an array of pointers which link them to the other work-area object that are attached to them and a pointer which links it to the object to which it is attached.

Figure 8 gives a graphical illustration of how the work-area is made up. The arrows represent pointers. There is an array in each object, which lists pointers to the objects that are attached to it. There is also a pointer that links an object with the object it is currently attached to.

Figure 9 represents the hierarchical structure that represents the objects in figure 8. Object A has an array of pointers that links it to objects B and C. Similarly, B has a pointer that links it to object D.

Each type of WorkAreaObject has a number of parameters, which describe how it reacts with other WorkAreaObjects:

**Table 1**

| Parameter | Purpose |
|---|---|
| IsStackab le | If the parameter for an object is FALSE, an object cannot be attached to it. For example, objects cannot be attached to lines. |
| IsAligned | If this parameter for an object, A, is TRUE, object A will get automatically aligned when it is dropped onto another object, B. For example, when a number is dropped onto a number line. |
| IsSnapInt o | If an object, A, is dropped onto the boundary of an object B with the 'SnapInto' property, object |
| | A will be moved so that it is fully enclosed inside object B. This only applies if an object has the property 'IsAligned' . |

Objects A,B,C and D are used in order to help explain concepts later. These objects are arbitrary - they do not refer specifically to objects A,B,C and D used in the example above.

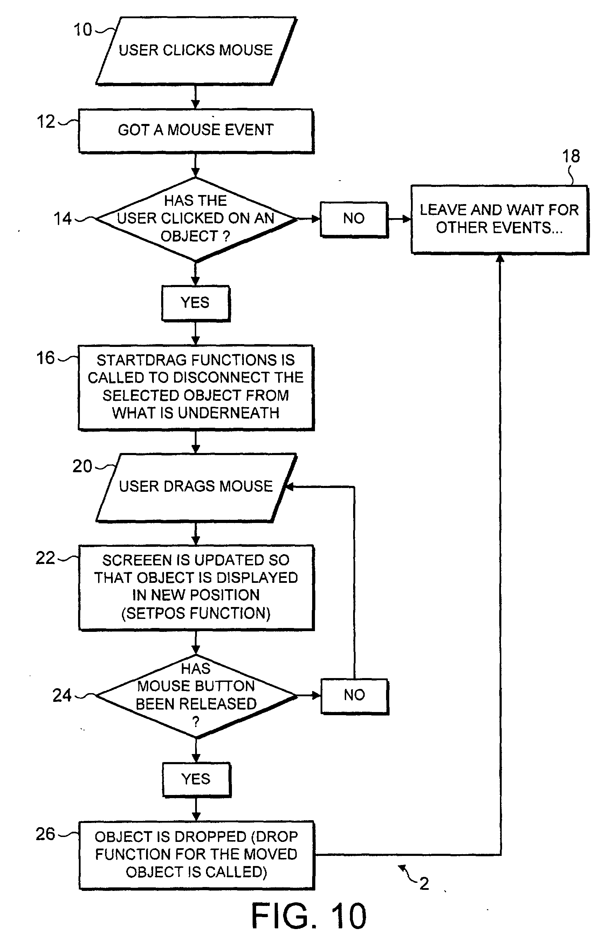

Work-area objects in the embodiment are grouped and 'ungrouped' at the start and end of a drag and drop sequence. When an object A is 'picked up', it is removed from the WorkAreaObject B in which it belongs and when it is 'dropped', it is added to a new WorkAreaObject, C, on which it was placed. Figure 10 provides a more formal representation of this process.

The functions provided by a user input device 2 are shown in figure 10. The user input device 10 is functionality provided by the system shown in figure 10, which receives an input from a physical mouse.

And step 10, user clicks a mouse. The mouse event 12 is passed to a decision step 14 to determine whether a user has clicked on an object. If yes, a start drag function is called at 16. The user drags the mouse at step 20 and the screen is updated so that the object is displayed in a new position at step 22. If the mouse button has been released at step 24, the object is dropped in the new position at step 26. If no, the function is left to wait from other events.

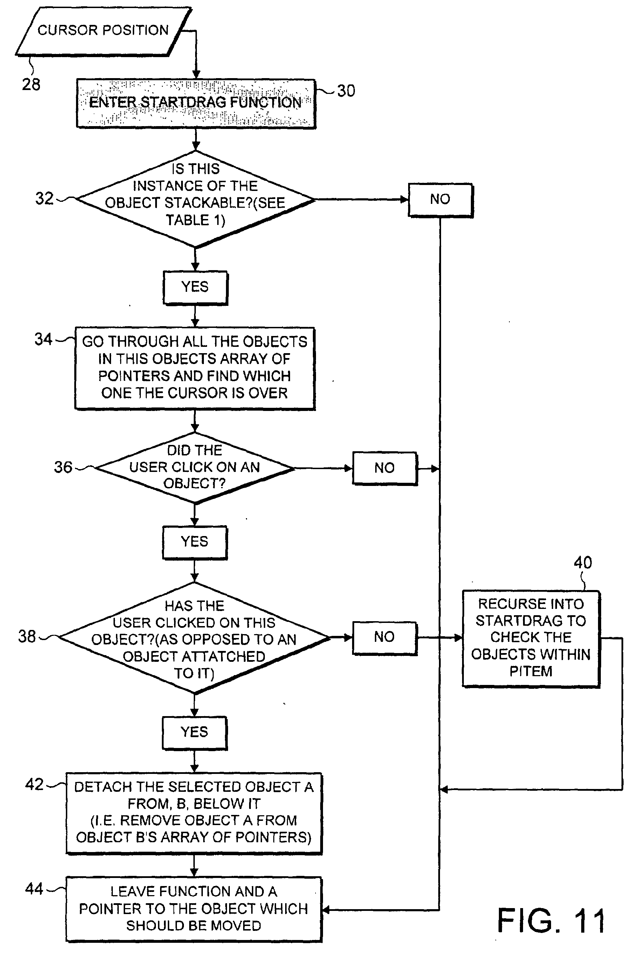

Figure 11 represents what happens when the user attempts to start the drag process (see the StartDrag function called in figure 10). The 'background' instance (figure 9) of the StartDrag function is called. The StartDrag function then selectively recurses through the objects attached to it until the object which is closest (in terms of Z-order) is checked. The cursor position step 28 is entered into the StartDrag function 30. If the object is stackable at step 32, the objects in the chosen objects array of pointers are investigated at step 34. If not, leave this instance of the function. If the user clicked on object at step 36, then at step 38 it is determined whether the user has clicked on an object or an object attached to the object. If the user does not click on an object at step 36, exit this instance of the function. If yes at step 38, then the selected object is detached from an object below it by removing the first object from the array of pointers for the second object.If no at 38, then at step 40 the StartDrag function is recursed.

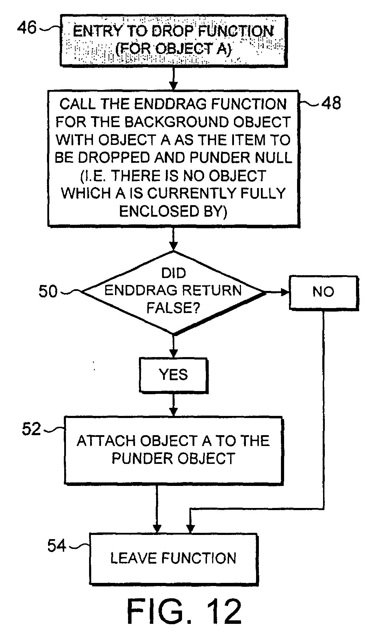

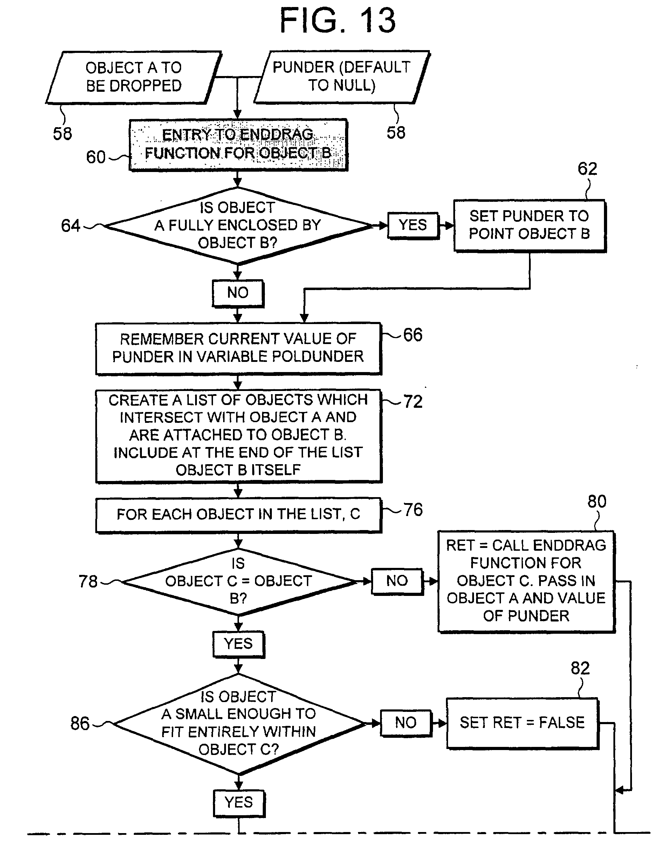

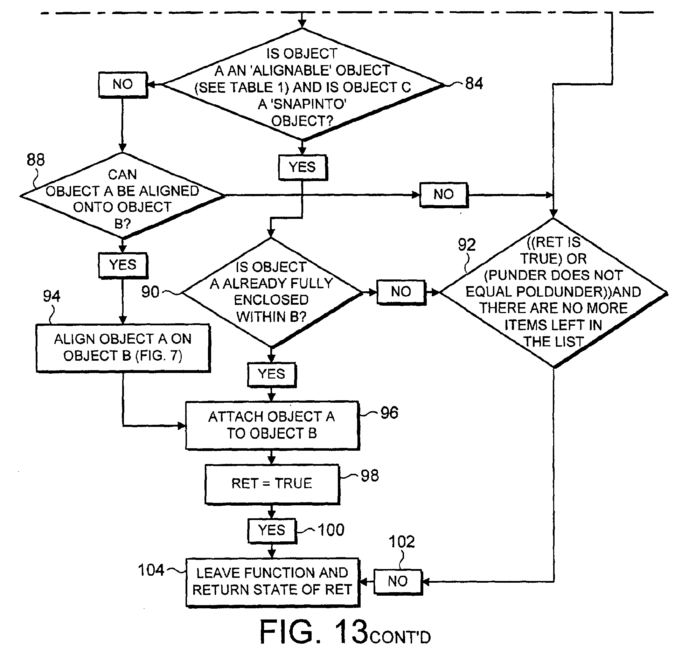

Figure 12 and Figure 13 provide a representation of what happens when the user has finished dragging an object.
The Drop method is called for the object that is being dragged. The Drop method (figure 12) calls the EndDrag method (figure 13), which is a recursive function that starts at the background object itself. The pUnder variable is used to store the last object in the hierarchy in which the object to be dropped was fully enclosed. If the EndDrag function was unable to attach the object, the Drop function attaches the object to pUnder. At figure 12, the Drop function is entered at step 46. At step 48, the EndDrag function is called for the background object with object A as the item to be dropped and the pUnder null (i.e. there is no object which A is currently fully enclosed by). At 50, if the EndDrag returned a false, then object A is attached to the pUnder object at step 52. At step 54, the function is exited.

Figure 13 shows the EndDrag function in greater detail.
At step 56 the object to be dropped A and the pUnder at step 58 is entered into the EndDrag function for object B at step 60. At step 64, it is determined whether object A is fully enclosed by object B. If no, then at step 66 the value of pUnder is remembered as variable poldUnder. At step 72 a list of objects which intersect with object A and are attached to object B are created. At step 76, for each object in the list C, it is determined at step 78 whether object C = object B. If so, then it is determined at step 86 if object A is small enough to fit entirely within the object C. If yes, then at step 84 it is determined whether object A is an alignable object and whether object C is a "Snapinto" object. If yes, then at step 90, and it is determined whether object A is already enclosed within object B. If no at any of the point in this function, then step 80 (RET=Call EndDrag function for object C pass in object A and value of pUnder), step 82 (Set RET=false) or step 92 (RET is TRUE OR pUnder does not equal poldUnder AND there are no more items left in the list), are called respectively. If yes, the step 96, objected A is attached to object B. if Ret=TRUE at the 98, then the function is left a step 104 and return state of RET.
Steps 88 (can object A be aligned onto object B) and 94 (align object A onto object B)allow one object to be aligned with another as shown in figure 7.

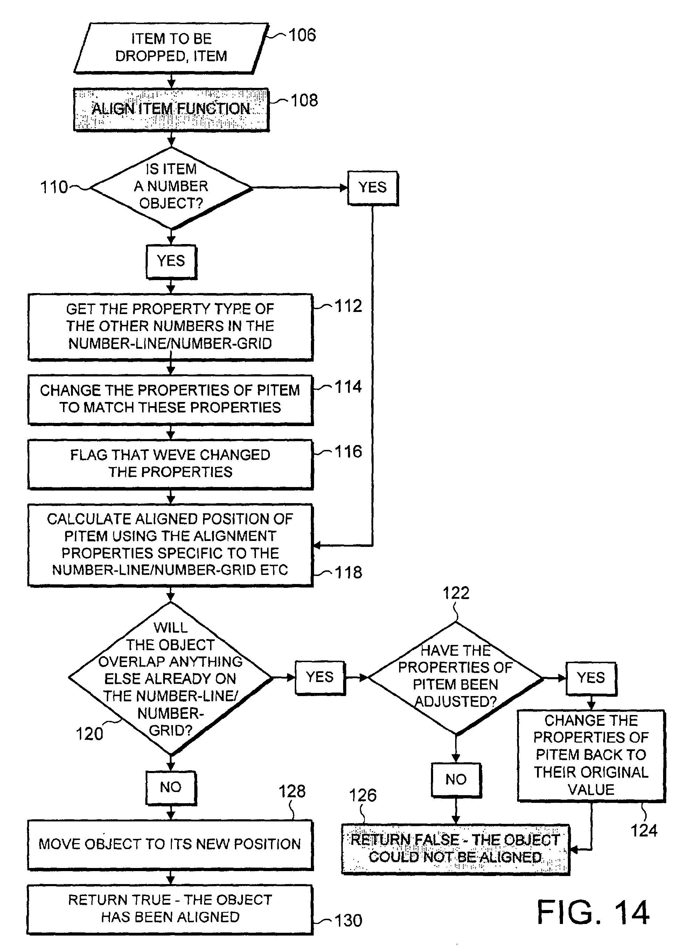

Figure 14 describes the AlignItem function which is called from the EndDrag function . It is within this algorithm than the property adjustment takes place. At step 106, an item to be dropped is entered into the align item function at step 108. At step 110 if the item is a number object, then the property type of the other numbers in the number line or number grid is retrieved at step 112. At step 114, the properties of the item are changed to match the properties of the existing numbers in the number line or numbered grid. At step 116, a flag is set to indicate that the properties have been changed. At step 118, the alignment position of the item is calculated using the properties specific to the number line or numbered grid.

At step 120 it is determined whether the object will ovverlap anything else already on the number line or number grid. If yes, then it is determined whether the properties of the item have been adjusted at step 122.
If yes, then the properties of the item are changed back to their original values at step 124 and a false is returned at step 126 to indicate that the object could not be aligned. If at step 120 it is determined that the object will not overlap any thing else. The object is moved its new position at step 128 and a true is returned to indicate that the object has been aligned at step 130.

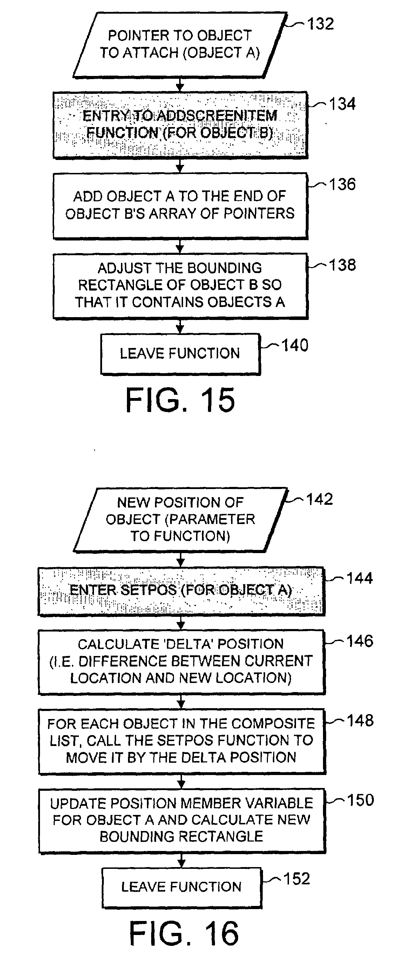

Figure 15 shows what happens when a WorkAreaObject is attached to another WorkAreaObject. First, at step 132, a pointer to object to attach (object A) is passed to an add screen item function (for object B). At step 136, object A is added to the end of the array of pointers for object B. At step 138, the bounding rectangle of object B is adjusted so that it contains object A and the function terminated at step 140.

Figure 16 gives a high-level view of what happens when the position of an object is changed - for example when the user drags an object across the screen. It is this function that facilitates multiple objects to be moved simultaneously (e.g. the numbers on a number grid are moved with the number grid itself).

At step 142, the new position of an object is passed to a SetPos function at step 144. The delta position (i.e the difference between the current location and the new loocation) is determined at step 146. For each object in the composite list, the SetPos function is called to move the object to a new Delta position at step 148. At step 150, the position variable of object A is updated and a new bounding rectangle calculated. The function is terminated at step 152.

## Claims

1. A system for arranging and displaying objects on a display comprising a a display controller for controlling a display, the display thereby being configured to show a plurality of objects, the system further comprising a user input device configured to allow a user to move objects to similar regions of the display, the display controller automatically configuring the objects in similar regions of the display to share similar properties.

2. A system according to claim 1, wherein the similar properties indicate that objects belong as a group thereby configuring the controller to manipulate those objects as a group.

3. A system according to claim 2, wherein the controller is configured such that a user may move a plurality of objects in one region without requiring selection of all the objects.

4. A system according to claim 2 or 3, wherein the controller is configured such that a user may move a plurality of objects in one region by selecting only one object in that region.

5. A system according to claim any preceding claim, wherein the display controller is arranged to display items in a similar region as being on a representation of a sheet of paper.

6. A system according to any preceding claim , wherein the display controller is arranged such that objects are shown on a single sheet of paper and are movable together by selecting that piece of paper.

7. A system according to any preceding claim, wherein at least one object is a number line, and other objects are numbers, the numbers being movable with the number line and by selecting the number line.

8. A system according to any preceding claim, wherein at least one object is a number grid, and other objects are numbers, the numbers being movable with the number grid by selecting the number grid.

9. A system according to any preceding claim, wherein the properties are visual characteristics.

10. A system according to claim 9, wherein the characteristics are the font size.

11. A system according to claim 9 or 10, wherein the characteristics are the alignment.

12. A system according to any preceding claim, wherein the system is a teaching system.

13. A system according to any preceding claim when the system is a system for teaching numeracy.

14. A method of automatically arranging objects on a displayin a computer display system , comprising displaying a work area and displaying objects on that work area, moving objects to it similar regions of the work area, and automatically configuring the display such that objects in similar regions of the work area share similar properties.

15. A method according to claim 14, wherein the similar properties indicate that objects belong as a group thereby allowing those objects to be manipulated as a group.

16. A method according to claim 14 or 15, wherein a user may move a plurality of objects in one region without requiring selection of all the objects.

17. A method according to claim 14, 15 or 16, wherein a user may move a plurality of objects in one region by selecting only one object in that region.

18. A method according to claim any of claims 14 to 17, wherein the display is arranged to display items in a similar region as being on a representation of a sheet of paper.

19. A method according to any of claims 14 to 18, wherein the display is arranged such that objects are shown on a single sheet of paper and are movable together by selecting that piece of paper.

20. A method according to any of claims 14 to 19, wherein at least one object is a number line, and other objects are numbers, the numbers being movable with the number line and by selecting the number line.

21. A method according to any of claims 14 to 20, wherein at least one object is a number grid, and other objects are numbers, the numbers being movable with the number grid by selecting the number grid.

22. A method according to of claims 14 to 21, wherein the properties are visual characteristics.

23. A system according to claim 22, wherein the characteristics are the font size.

24. A system according to claim 22 or 23, wherein the characteristics are the alignment.

25. A method according to any preceding claim, wherein the system is a teaching system.

26. A method according to any preceding claim, wherein the system is a system for teaching numeracy.

27. A computer program arranged to carry out method steps set out in of any of claims 14 to 26.
